# EUROPÄISCHE PATENTSCHRIFT

(11) **EP 2 876 822 B1**
(45) Veröffentlichungstag und Bekanntmachung des Hinweises auf die Patenterteilung: **27.07.2016**
(21) Anmeldenummer: 14194366.2
(22) Anmeldetag: 21.11.2014
(51) Int. Cl.: H04B 7/155, H04W 84/04

(54) **Tetra-Gleichwellen-Funknetzvorrichtung**
Tetra simulcast radio network device
Dispositif de réseau radio Tétra en onde continue

(30) Priorität: 22.11.2013 DE 102013112940
(43) Veröffentlichungstag der Anmeldung: 27.05.2015
(73) Patentinhaber: KaiTec GmbH, 63768 Hösbach (DE)
(72) Erfinder: Schmitt, Christoph, 63768 Hösbach (DE)
(74) Vertreter: Spachmann, Holger

(56) Entgegenhaltungen:
- EP-A2- 2 280 497
- DE-U1-202010 008 218

## Beschreibung

Die Erfindung betrifft eine TETRA- Gleichwellen-Funknetzvorrichtung, die mindestens eine zentrale Funknetz-Steuereinrichtung und mindestens zwei Funkzelleneinrichtungen umfasst.

### STAND DER TECHNIK

Ein Bündelfunksystem ist ein Überbegriff für Funksysteme verschiedener Standards, wobei TETRA, TETRAPOL und APCO 25 die bekanntesten digitalen Standards sind und MPT-1327, SMARTNET und SMARTZONE sowie analoge Gleichwellennetztopologien nach dem BOS-Standard die entsprechenden analogen Funknetzsysteme repräsentieren. Ebenfalls verschiedene Mobilfunkdienste arbeiten nach diesem Standard und ermöglichen eine Kanalbündelung, bei der nicht jedes Netz für sich oder jede Firma, die ein innerbetriebliches drahtloses Kommunikationsnetz betreibt, eine eigene Infrastruktur mit Funkturm, Feststation, usw. ausbauen muss, sondern einen gemeinsam genutzten Standard verwendet. Somit müssen nicht viele Funkkanäle individuell jeder Firma zugewiesen werden, sondern ein Netzbetreiber hat an seinem Standort vier oder acht Kanäle in Betrieb, die bedarfsweise an die verschiedenen Nutzer freigeschaltet werden können. Zur Erhöhung der Funkreichweite (Abdeckung) können mehrere Funktürme über Standleitung oder Richtfunkstrecken zusammengeschaltet werden.

Ein wichtiges Anwendungsgebiet der Bündelfunktechnik und insbesondere der unten erläuterten analogen Gleichwellentechnik ist der BOS-Funk. Der BOS-Funk ist ein nicht-öffentlicher mobiler UKW-Landfunkdienst, der von Behörden und Organisationen mit Sicherheitsaufgaben (BOS) verwendet wird. Er ist durch die BOS-Funkrichtlinie reglementiert, die vom Bundesministerium des Inneren verfasst wurde. Ziel ist es, einen sicheren und störungsfreien Funkbetrieb aller Bedarfsträger der BOS, insbesondere Polizei, Zoll, Technisches Hilfswerk, Feuerwehren, Katastrophenschutzbehörden, Rettungsdienste etc., zu gewährleisten. Die Besonderheit des BOS-Funks besteht darin, dass diese Frequenzzuweisungen jeweils die Genehmigung enthalten, neben den zugewiesenen Frequenzen zum Zweck der Zusammenarbeit mit anderen BOS auch deren Frequenzen nutzen zu dürfen. Behördenfunk wurde bis Ende der 80er Jahre weltweit mit analogen Funknetzen im 2- und 4-Meter-Band (BOS-Funk) betrieben. Die fehlenden oder zu schwachen Verschlüsselungsmöglichkeiten für den Analogfunk führten zur Entwicklung digitaler Systeme.

Der Mitte der 90er Jahre entwickelte TETRA-Standard wird in vielen europäischen und außereuropäischen Ländern genutzt. TETRA (Terrestrial Trunked Radio - ursprünglich Trans European Trunked Radio) ist ein Standard für digitalen Bündelfunk. Er ist als universelle Plattform für die unterschiedlichsten Mobilfunkdienste gedacht. Mit TETRA lassen sich Universalnetze aufbauen, über die der gesamte betriebliche Mobilfunk von Anwendern mit besonderen Sicherheitsanforderungen, wie Behörden und Organisationen mit Sicherheitsaufgaben, der Industrie, ÜPNV, Flughäfen und Militär, abgewickelt werden kann. Das TETRA-Funknetz ist technologisch zellulär; Zellwechsel und damit Gesprächsweitergabe ist im gesamten Netz möglich - in dieser Hinsicht entspricht der prinzipielle Aufbau eines BOS-Funknetzes - ob digital oder analog - der Struktur des weit verbreiteten Mobilfunknetzes GSM. Die tatsächliche Zulässigkeit der Zellnutzung wird jedoch auf Verbindungsnetzebene geregelt, hier kommen u. a. auch die Leitstellen ins Spiel. Das TETRA-Netz verhält sich im Prinzip wie ein IT-Netz mit Netzberechtigungen und Ausschlüssen sowie Möglichkeiten zur Zusammenschaltung von Benutzergruppen und Funktionen. Die Luftschnittstelle, also das eigentliche Funknetz, liefert dann nur noch den Zugriff darauf und überträgt digitale Signale. Diesen Netzmodus nennt man "Trunked Mode" (TMO-Modus), also vermittelten Modus. Die Fähigkeiten von TETRA-Endgeräten zum "Direktmodus" (DMO-Modus) und "Trunked-Modus" (TMO-Modus) müssen durch entsprechende Frequenzplanung / Kanalzuweisung im Netz berücksichtigt werden. Dies geschieht zum Beispiel durch Freihalten solcher Kanäle.

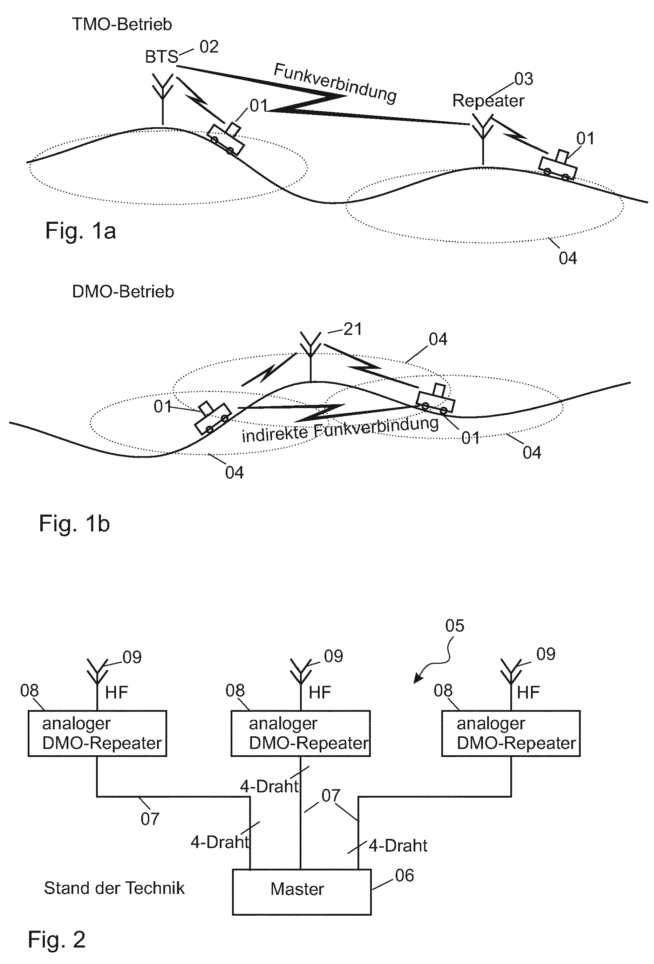

Ein Kernproblem der Bündelfunktechnik besteht darin, dass, wenn sich ein Endgerät außerhalb der Reichweite einer Funkzelle befindet, dieses von der weiteren Kommunikation innerhalb des Funknetzes ausgeschlossen ist. Um dieses Problem in TETRA-Netzen zu lösen, können die Endgeräte zum einen direkt miteinander im sog. "Direct Mode" (DMO) kommunizieren, zum anderen indirekt über TMO-Repeater im TMO-Modus angebunden werden, siehe hierzu **Fig. 1a****.** TMO-Repeater sind in der Lage, eine zelluläre und vermittelnde Funktionalität aufrechtzuerhalten.

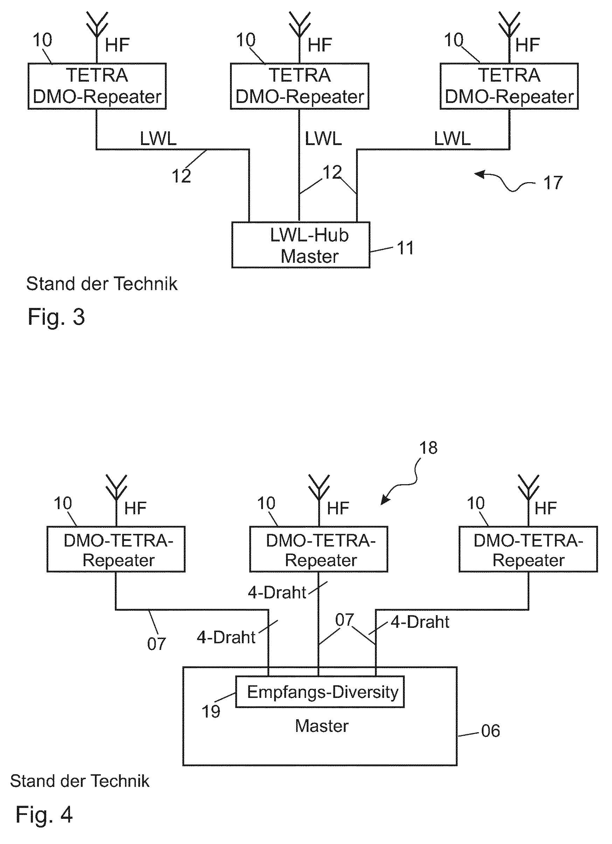

Die Reichweite von Endgeräten im DMO-Modus untereinander ist - besonders innerhalb von Gebäuden - stark eingeschränkt und nicht kalkulierbar. Zur Reichweitenerhöhung in schlecht oder nicht versorgten Gebieten und Umgebungen, worunter insbesondere weit verzweigte Gebäude fallen, werden häufig Repeater-Verfahren mittels sog. TETRA-HF-Repeater für den DMO-Mode bevorzugt, die das Signal der Endgeräte mit neuer Sendeleistung abstrahlen, aber keine zelluläre Funktionalität wie im TMO-Modus aufweisen, siehe hierzu **Fig. 1b****.** Ist der Einsatz von mehreren TETRA-Antennennetzwerken, d.h. mehreren Antennenverstärkern, die an einen HF-Repeater angeschlossen sind, erforderlich, muss für die Zusammenschaltung der Antennen ein kostenintensives Übertragungs- und Verteilungsnetzwerk, insbesondere ein aktives / passives Lichtwellenleiter-Netzwerk (LWL-Netzwerk), nachträglich realisiert werden, wie es beispielsweise in **Fig. 3** dargestellt ist.

Je nach den oben vorgestellten Gegebenheiten kommen zur Verbesserung der Funkversorgung zwei verschiedene Varianten von Repeaterlösungen nach der ETSI-Standardisierung zum Einsatz:
- "TMO - Trunked Mode Operation" (ETSI TS 101 789-1 und EN 300 392-2) - in **Fig. 1a** dargestellt
- "DMO - Direct Mode Operation" (ETSI EN 300 396xx, ETS 300 396xx und EN 300 396xx) - dargestellt in **Fig. 1b**

Der TMO-Modus kommt meist für lokale TETRA-Versorgungsgebiete als Füllsender zum Einsatz. Dabei sind Signallaufzeiten zwischen der Funkzelleneinrichtung und dem Repeater sowie ein hoher Entkopplungsfaktor zu beachten. Die entsprechende Hardware steht als Kanal oder Bandrepeater von verschiedenen Herstellern zur Verfügung.

Der DMO-Modus lässt sich in einen direkten DMO-Betrieb zwischen zwei Endgeräten, einen DMO-Repeaterbetrieb, bei dem zwei oder mehrere Endgeräte über einen DMO-Repeater zur Erhöhung der Antennenreichweite miteinander verbunden sind, und einen DMO-Gateway-Betrieb unterteilen. Die DMO-Gateway-Funktion ermöglicht die Erweiterung eines TMO-Netzes in nicht versorgten, lokalen TETRA-Versorgungsbereichen und ermöglicht die Versorgung eines Endgerätes über die Reichweite des TMO-Netzes hinaus mittels eines DMO-Repeaters, wobei jedoch keine Kanalvermittlung sondern - wie oben erwähnt - eine Direktverbindung erstellt wird. Hierbei handelt es sich um Leistungsmerkmale von Endgeräten, insbesondere Funkgeräten (Handfunk oder Fahrzeugfunkgeräte), die im DMO-Modus der Repeater-Funktion eine Reichweitenerhöhung zwischen Endgeräten ermöglichen. Die Funkgeräte können in der Regel zwischen TMO- und DMO-Betrieb umschalten. Für diese Betriebsart sind bei der Bundesnetzagentur (BNetzA) DMO-Frequenzen zu beantragen.

DMO-Repeater ermöglichen je nach Funkgeräteart einen Einsatz mit unterschiedlichen Sendeleistungen und können somit auch Antennennetzwerke speisen, zum Beispiel eine Versorgung des Gebäudeinneren oder eine Tunnelversorgung gewährleisten. Schematisch ist ein solcher DMO-Betrieb in Fig. 1b dargestellt.

Bei dem DMO-Betriebsverfahren gibt es drei unterschiedliche Betriebsarten:
- Betriebsart 1a: Downlink (Signal von Senderstandort zum Funkempfänger) und Uplink (Signal vom Funkgerät zum stationären Sender- / Empfängersystem) sind auf einer Frequenz (hier bei der Betrachtung im 70 cm-Bereich), jedoch in unterschiedlichen Zeitschlitzen übertragen. Eine Simplex-Sprachkommunikation - d.h. eine Sprachkommunikation in einer Richtung - ist möglich.
- Betriebsart 1 b: Downlink und Uplink liegen auf einer Duplexfrequenz (definiertes Frequenzpaar), eine Sprachkommunikation ist möglich.
- Betriebsart 2: Downlink und Uplink liegen auf einer Duplexfrequenz, Vollduplex ist möglich, die Frequenznutzung ist wie beim Betrieb 1 b.

Speziell für die Anforderungen von Behörden und Sicherheitsorganen wie Feuerwehren, Katastrophenhelfern oder Polizei wurde eine weitere Möglichkeit der Funkversorgung geschaffen. Die sogenannte autarke TETRA-Basisstation basiert auf einer herkömmlichen Basisstation, jedoch ohne Anbindung an das Rumpfnetz der BOS, sowie ohne Netzwerkkonfiguration, sodass sämtliche behördlichen Organe direkt kommunizieren können. Dies bietet den Vorteil, drei unterschiedliche Gesprächskanäle auf einer Frequenz zu generieren und dabei keine Rückwirkungen in das Rumpfnetz der BOS zu erzeugen. Insbesondere für den lokalen Einsatzstellenfunk der Katastrophenabwehr und Feuerwehren ist dies eine sehr hilfreiche Lösung.

Bei allen Betriebsarten werden Protokolle nach EN 300 396 verwendet.

Insbesondere in Gebäuden können außerhalb befindliche Funkzelleneinrichtungen nur schwer bis ins Gebäudeinnere, insbesondere in dickwandige Gebäude oder Kellerbereiche, strahlen. Aus diesem Grund werden Funknetzvorrichtungen basierend auf Gleichwellen-Abstrahltechnik verwendet, um einen DMO- oder TMO-Betrieb von Endgeräten, meist Einzelfunkgeräten, innerhalb des Gebäudes und eine Kommunikation zwischen im Gebäude befindlichen Personen mit Endgeräten und außerhalb des Gebäudes befindlichen Kommunikationspartnern herzustellen.

Bei der herkömmlich verwendeten analogen Funkversorgung werden sog. Gebäudefunkanlagen (nach Vorgabe der Behörden und Organisationen für Sicherheit - BOS → technische Richtlinie BOS - TR BOS) zum Einsatz gebracht. Hierbei werden eine Mastereinheit als zentrale Funknetzsteuereinrichtung und je nach Funkversorgungsumfeld verschiedene Slave-Systeme als mit der Funknetz-Steuereinrichtung verbundene Funkzelleneinrichtungen über 4-Draht-Leitungen angeschaltet, wobei die 4-Draht-Leitungen die auszutauschenden analogen Sprach-Signale über die Funknetzsteuereinrichtung an alle angeschlossenen Funkzelleneinrichtungen weitergeben. An diese Funkzelleneinrichtungen werden entsprechende passive Antennennetzwerke angeschaltet, die vornehmlich im 2-Meter- oder 4-Meter-Band abstrahlen.

Die Funkvorrichtung arbeitet meist auf einer Gleichwellen-Architektur (gleiche Funkfrequenz für die gesamte Kommunikation) und stellt Einsatzkräften eine gleichmäßige DMO-Funkkommunikation zur Verfügung. Dabei werden feuerwehrspezifische Einrichtungen an diesem Standort miteinbezogen. Ein Gleichwellennetz, auch SFN (Single Frequency Network) genannt, besteht aus mehreren räumlich über ein zusammenhängendes Gebiet verteilten Sendeanlagen, welche synchron zueinander und unter Nutzung derselben Senderfrequenz identische Informationen ausstrahlen. Das Ziel ist die Versorgung eines größeren, zusammenhängenden Bereichs, als es aufgrund des Geländes mit nur einem Sender möglich wäre. Zudem können so Frequenzkapazitäten eingespart werden, da alle Sender das gleiche Frequenzband benutzen. Die knappe Ressource von Funkfrequenzen wird dadurch besser genutzt. Damit eine Gleichwellen-Kommunikation hergestellt werden kann, gelten physikalische Einschränkungen, wobei beispielsweise Auswirkungen durch Interferenz durch zusätzliche technische Maßnahmen bei der Informationsübertragung kompensiert werden können.

Aus dem Stand der Technik sind analogbasierte Gleichwellen-Funknetzvorrichtungen bekannt, wie sie in **Fig. 2** dargestellt sind. Diese umfassen mehrere analoge Funkzelleneinrichtungen, die als analoge DMO-Repeater ausgelegt sind und die DMO-Endgeräte mit einer vollständigen Extraktionsmöglichkeit von Sprach- und Datensignalen darstellen. Diese sind über analoge Kommunikationsverbindungen mit einem Master - einer Funknetzsteuereinrichtung - verbunden, wobei beim Empfang eines Signals eines Endgeräts durch eine Funkzelleneinrichtung das empfangene Signal analog im NF-Bereich als Sprachsignal zur Steuereinrichtung weitervermittelt wird. Um eine störungsfreie Gleichwellen-Funkabstrahlung zu ermöglichen, muss das empfangene Sprachsignal synchron an alle angeschlossenen Funkzelleneinrichtungen weitergeleitet werden, um eine frequenz- und phasengenaue Abstrahlung im Gleichwellenfunknetz zu ermöglichen. Hierzu nimmt die Gleichwellen-Funknetzvorrichtung zum einen eine Detektion des stärksten Empfangssignals der von den mehreren Funkzelleneinrichtungen empfangenen Eingangssignale vor - beispielsweise durch Bestimmung des S/N-Verhältnisses, wählt eine Empfangsfunkzelleneinrichtung aus, und leitet deren Empfangssignal phasen- und frequenzgenau zu den angeschlossenen Funkzelleneinrichtungen zur synchronen Abstrahlung weiter.

Dabei sind bei der Realisierung von Gleichwellenfunknetzen mehrere Faktoren sehr wichtig:
1. Alle Sender müssen zeitgleich die gleiche Information, wie beispielsweise das exakt gleiche Rundfunkprogramm oder die gleiche abzustrahlende Funkkommunikation aussenden; hierbei ist insbesondere eine hohe Frequenz- und Phasentreue aller Sender sowie eine synchrone Abstrahlung der zu sendenden Signale auch unter Berücksichtigung der verschiedenen Signallaufzeiten erforderlich.
2. Die Sendefrequenz muss bei allen Sendern gleich sein oder darf nur eine geringe Abweichung von einigen wenigen Hertz aufweisen. Ersterer Fall wird als synchrones Gleichwellennetz bezeichnet, letzterer Fall als asynchrones Gleichwellennetz.

Gleichwellennetze verwenden in digitalen Übertragungsverfahren, insbesondere im TETRA-Verfahren, digitale Modulationsverfahren mit mehreren Trägern und/oder Zeitschlitzen, wie Time Division Multiplex Access (TDMA) und/oder Coded Orthogonal Frequency Division Multiplex (COFDM), ein auf Orthogonal Frequency Division Multiplex (OFDM) basierendes Modulationsverfahren. Typische Gleichwellennetze sind die auf den Modulationsverfahren COFDM basierenden digitalen terrestrischen Fernsehprogramme DVB-T und das bei mobilen Geräten eingesetzte Digital Multimedia Broadcasting (DMB). Bei Hörfunkprogrammen findet ein Gleichwellenbetrieb im Rahmen von Digital Audio Broadcasting (DAB) Anwendung. Gleichwellennetze werden insbesondere im Bereich der Behörden und Organisationen mit Sicherheitsaufgaben mit dem BOS-Funk eingesetzt. Dabei finden sie insbesondere bei der Funkversorgung innerhalb von Gebäuden und geschlossenen Anlagen, wie beispielsweise Gruben- oder Kanalbauwerken, Anwendung.

Aus dem Stand der Technik ist das in **Fig. 3** dargestellte digitale TETRA-Repeaternetzwerk bekannt, das allerdings keine Gleichwelle darstellt. In **Fig. 3** ist ein Lichtwellenleiternetzwerk gezeigt, bei dem eine nicht dargestellte BTS über einen Lichtwellen-HUB mehrere TETRA-DMO-Repeater mit aufgetrenntem Signalzweig als Funkzelleinrichtungen angeschlossen sind. Dieses Antennennetzwerk basiert allerdings nicht auf einem Gleichwellenprinzip, sondern verwendet TETRA-TMO-typische Frequenzbänder und entspricht in seiner Struktur der in **Fig. 1a** dargestellten Topologie. Werden die digitalen Empfangssignale von einem HF-Repeater empfangen, werden sie digital über Lichtwellenleiter an den Lichtwellen-HUB weitergeleitet, der diese wiederum an eine BTS weiterleitet, so dass diese in einem zellulären mehrkanaligen TETRA-Netzwerk weitergegeben werden. Hierzu ist keine synchronisierende Kommunikation zwischen Funkzelleneinrichtungen und Steuereinrichtung, in diesem Fall einer BTS, notwendig.

Aus der EP 1 027 777 B1 ist ein Verfahren zur Übertragung von Informationen über eine Funkschnittstelle bekannt, bei der zwischen einem Endgerät und einer Funkzelleneinrichtung zumindest in einem Teilbereich des gesamten Funkversorgungsgebietes eine Gleichwellenübertragung mit einer einzigen Frequenz durchgeführt wird, indem mehrere der Funkzelleneinrichtungen die selbe Information gleichzeitig und mit der selben einzigen Frequenz zu mehreren Endgeräten übertragen.

Des Weiteren geht aus der DE 696 13 633 T2 ein Verfahren zur Kommunikation über einen Direktmoduskanal hervor, bei dem ein Endgerät über den Direktmoduskanal sendet und in dieser Übertragung Informationen bezüglich der verwendeten Sendeleistung einschließt, und ein zweites Endgerät oder eine Funkzelleneinrichtung die Übertragung über den Direktmoduskanal überwacht, die enthaltenen Informationen bezüglich der Sendeleistung speichert und die Qualität der Übertragung des Endgerätes misst, wobei es bzw. sie auf Ergebnis der Messung entscheidet, ob das Senden auf dem Direktmoduskanal begonnen werden kann.

Daneben betrifft die GB 2 414 362 A eine Synchronisation von Endgeräten, die in einem TETRA-DMO-Verfahren kommunizieren, wobei mittels eines Timingverfahrens eine Synchronisation der Kommunikation erreicht wird.

In der EP 2 280 497 A1 ist eine TETRA-Gleichwellen-Funknetzvorrichtung beschrieben, die mehrere TETRA-DMO-fähige Funkzelleneinrichtungen und eine zentrale Steuereinrichtung umfasst, wobei empfangene Signale zumeist als Sprachdaten dekodiert von einer Funkzelleneinrichtung an die Steuereinrichtung weitergeleitet und dort zur synchronisierten Abstrahlung an alle Funkzelleneinrichtungen geleitet wird. Eine entsprechende Darstellung ist in **Fig. 4** gezeigt. Die TETRA-Kommunikationskomponenten sind in den Funkzelleneinrichtungen als TETRA-Endgeräte untergebracht, wobei Sende- und Empfangspfad getrennt sind, und die Synchronisation verläuft auf Basis der dekodierten Sprachsignale, die beispielsweise über eine 4-Draht Leitung übertragen werden kann, wodurch vorhandenen Infrastruktur einer analogen Gleichwellenvorrichtung genutzt werden kann. Es hat sich gezeigt, dass die Synchronisation und Signal der TETRA-Gleichwellensignale nur mit erhöhtem hardwaretechnischem Aufwand realisierbar ist.

Bezüglich einer Gleichwellen-Kommunikation innerhalb eines Gebäudes gibt es für den digitalen Bündelfunk, insbesondere für die TETRA-Inhouse-Versorgung, keine technisch zuverlässig und einfach zu realisierende Lösung. Dies ergibt sich aus dem Grundproblem der dargestellten digitalen Gleichwellenlösungen, dass die Kommunikationslogik und Sprachsignalextraktion in jeder Funkzelleneinrichtungen vorgehalten wird, wodurch HF-technische Schwierigkeiten der Signalqualität und Synchronisationsprobleme auftauchen, so dass die Spezifikationen des TETRA-DMO/TMO-Standards nicht stabil eingehalten werden können.

Demgegenüber gibt es in der bisherigen analogen Funkversorgung eingeführte Standardausführungen, die für die künftige digitale Funkkommunikation in den nächsten Jahren zu migrieren sind. Diese in der analogen Technik bereits eingeführten technischen Lösungen haben sich bewährt, sind allerdings nicht eins zu eins für die digitale Welt nutzbar und müssen daher vollständig erneuert werden. Hierbei ergibt sich das Problem hoher Erneuerungs- und Austauschkosten, da die Funknetzvorrichtungen, die in der Regel aus mehreren Funkzelleneinrichtungen und einer Funknetzsteuereinrichtung aufgebaut sind, komplett auszutauschen sind. Hierbei spielen insbesondere der Bestandsschutz, die Zugehörigkeit zur Gebäudesubstanz und baulich verbundene Funknetzeinrichtungen, die mit dem Gebäudeobjekt verbunden sind, eine wichtige Rolle.

In der US 2011 0267 939 A1 ist ein Bündelfunknetzwerk mit einer zentralen Steuereinheit und mindestens zwei Funkzelleneinrichtungen bekannt, wobei ein DMO Betrieb zwischen den Endgeräten auch über verschiedene "access points" hinweg ermöglicht wird. Hierbei ist eine Umwandlung des HF-Signals in ein ZF bzw. Basisbandsignal zur Übertragung auf verdrahteten Leitungen vorgesehen, wobei die verschiedenen Kanäle synchronisiert werden.

Ausgehend von diesem Stand der Technik werden eine Vorrichtung, ein Betriebsverfahren und ein Umrüstverfahren vorgeschlagen, um ein TETRA-Gleichwellenfunksystem für einen DMO- oder TMO-Betrieb zur Verfügung zu stellen sowie bestehende analoge Gleichwellen-Funknetzvorrichtungen durch einfache Maßnahmen in digital basierte TETRA-Gleichwellen-Funknetzvorrichtungen überführen zu können. Hierdurch können die Probleme einer kostspieligen Umrüstung und einer beschränkten Frequenznutzung umgangen und die Nutzung bereits vorhandener Infrastruktur kann ermöglicht werden.

### OFFENBARUNG DER ERFINDUNG

Erfindungsgemäß wird hierzu eine TETRA-Gleichwellen-Funknetzvorrichtung vorgeschlagen, die eine zentrale TETRA- Steuereinrichtung (und mindestens zwei Funkzelleneinrichtungen umfasst. Die Funkzelleneinrichtungen sind mit der Steuereinrichtung über eine drahtgebundene Kommunikationsverbindung, bevorzugt ein Kupferkabel, insbesondere ein Twisted-Pair-Kabel wie beispielsweise Computer-Netzwerkkabel zur synchronisierten Abstrahlung mindestens eines von mindestens einer Funkzelleneinrichtung empfangenen HF-Empfangssignals eines TETRA-Endgeräts verbunden. Es wird vorgeschlagen, dass jede Funkzelleneinrichtung einen Tx-ZF/HF-Umsetzer und einen hiervon getrennten Rx-HF/ZF-Umsetzer umfasst, um über ein Antennennetzwerk empfangene TETRA-HF-Signale in ZF-Kommunikationssignale umzusetzen und umgekehrt. Die Steuereinrichtung umfasst zumindest einen getrennten Rx-ZF/HF-Umsetzer und einen getrennten Tx-HF/ZF-Umsetzer, um ZF-Kommunikationssignale in TETRA-HF-Signale umsetzen und umgekehrt. Die Steuereinrichtung umfasst des Weiteren einen TETRA-DMO-Repeater, der für einen DMO-Betrieb ausgelegt ist, und/oder eine TETRA-Basisstation, die für einen TMO-Betrieb ausgelegt ist, der bzw. die ein empfangenes TETRA- Rx-Signal auswertet zur Gleichwellenausstrahlung an alle Funkzelleneinrichtungen als TETRA-Tx-Signal ausgibt.

Mit anderen Worten wird eine Funknetzvorrichtung vorgeschlagen, die eine Gruppe aus zumindest zwei Funkzelleneinrichtungen umfasst, die mit einer zentralen Steuereinrichtung durch eine drahtgebundene Kommunikationsverbindung verbunden sind, d.h. eine Verbindung, die nicht in der Lage ist, HF-Signale zu übertragen, allerdings Signale in einem niederfrequenten Frequenzbereich übertragen kann. Jede Funkzelleneinrichtung ist in der Lage, ein empfangenes Signal Rx von einem abzustrahlenden Signal Tx getrennt zu behandeln. Ein von einer Antenne oder einem Antennennetzwerk empfangenes Rx-HF-Signal wird ohne Rücksicht auf ein besonderes Modulations- oder Übertragungsverfahren oder Extraktion darin enthaltener Informations- oder Sprachdaten auf ein niederfrequentes Zwischenband umgesetzt, insbesondere heruntergemischt oder digital abgetastet und durch ein digitales Downsampling-Verfahren in einen niederfrequenten Datenstrom heruntergerechnet, so dass das ZF-Signal über die Kommunikationsverbindung zur Steuereinrichtung übertragen werden kann. In der Steuereinrichtung werden die Signale aller Funkzelleneinrichtungen als Summensignal zusammengefasst, oder das qualitativ hochwertigste Signal mittels einer Diversity ausgewählt, das z.B. den besten SNR-Wert (Signal-Noise-Ratio) oder den höchsten Signalpegel aufweist. Das bzw. die empfangenen Rx-Signale werden wieder auf die HF-Trägerfrequenz hochgesetzt bzw. digital hinaufgesampelt und als analoges HF-Signal umgewandelt. Das hierdurch gewonnene HF-TETRA-Rx-Signal wird einem in der Steuereinrichtung umfassten TETRA-DMO-Repeater und/oder einer TETRA-Basisstation zugeführt, um hiernach in der Steuereinrichtung empfängt, ausgewertet, bearbeitet und an alle Funkzelleneinrichtungen als Tx-Signal zugeleitet zu werden. Eine Auswertung und Bearbeitung des Signals kann eine Analyse der im Signal enthaltenen Information, eine Fehlerkorrektur und Verstärkung umfassen. In einem Analyseschritt kann ein Kontrollkanal ausgewertet und entsprechende physikalische Kanalzuteilungen getroffen werden. Das TETRA-Signal kann somit nach Signalinhalt in Nutz- und Steuersignale analysiert und umgestaltet werden. Das nach dem Repeater verarbeitete Tx-HF-Signal wird hierzu in ein ZF-Trägerband umgesetzt, in Phase, Laufzeit und Amplitude angepasst, um kohärente Signale über die Kommunikationsverbindung an alle Funkzelleneinrichtungen zu übermitteln, und dort wieder in ein Tx-HF-Signal umgesetzt. Letztlich wird das Tx-HF-Signal über das Antennennetzwerk jeder Funkzelleneinrichtung synchron abgestrahlt. Der TETRA-DMO-Repeater und/oder die TETRA-Basisstation kann ein TETRA-Endgerät umfassen, so dass sich ein Benutzer zentral in der Steuereinrichtung an der Gleichwellenkommunikation beteiligen kann. Das TETRA-Endgerät kann hierzu an den HF-Eingang eines TETRA- Repeaterendgerätes angekoppelt werden. Die Steuereinrichtung, die einen DMO-Repeater und/oder eine TMO-Basisstation umfasst, kann umschaltbar zwischen DMO- und TMO-Repeatermodus betreibbar sein und auch in einem TETRA-Gateway Mode betreibbar sein. Das TETRA-Protokoll sieht pro Trägerkanal eine Zeitschlitzübertragung (TDMA) von Kommunikationssignalen vor, wobei in der Regel vier Zeitschlitze verfügbar sind. Während im DMO-Betrieb die Zeitschlitze 1 & 3 für Up- und Downlink verwendet und somit durch einen DMO-Repeater verstärkt werden, können im TMO-Betrieb alle vier Zeitschlitze eingesetzt werden, um parallele Sprachkanäle zu übertragen. Alternativ zu einer Repeaterlösung zur Verstärkung der empfangsbesten DMO-Kanäle kann eine Basisstation in der Steuereinrichtung vorgesehen sein, um ein TMO-Netz auf Gleichwellenbasis zu betreiben.

Die Funkzelleneinrichtung nimmt lediglich eine Herabsetzung des Trägerbandes vom HF-Signal auf ein Zwischenband zur Übertragung über die bandbegrenzte Kommunikationsverbindung vor, und die Steuereinrichtung bewirkt ein Heraufsetzen des ZF-Signals auf das HF-Band der Luftstrecke. In der Steuereinrichtung kann der TETRA-DMO-Repeater bzw. die Basisstation eine Analyse des Datensignals bzw. eine Extraktion des Modulationssignals vornehmen und es erfolgt eingangsseitig eine Selektion und Verstärkung des weiterzuleitenden Signals. Somit sind die Funkzelleneinrichtungen technisch einfach aufgebaut und benötigen keine besonders zu gewährleistende Synchronität oder besondere Hardwareanforderungen und eine datentechnische Behandlung des weiterzuleitenden Gleichwellensignals erfolgt nur in der zentralen Steuereinrichtung. Dies erhöht die Abhörsicherheit der Vorrichtung, da lediglich in der Steuereinrichtung ein Basisbandsignal abgreifbar ist.

In einer vorteilhaften Ausführungsform kann die drahtgebundene Kommunikationsverbindung eine Mehrdrahtleitung, bevorzugt eine 4-Draht-Leitung sein, insbesondere eine Twisted-Pair Leitung sein. Derartige Leitungen sind zumeist in bestehenden analogbasierten Gleichwellenanlagen verbaut und haben eine Maximalfrequenzbegrenzung weit unter einer HF-Trägerfrequenz. Zur Umrüstung bestehender Altanlagen können bestehende Kabelverbindungen oder beispielsweise Datenkabel, die in der Regel Twisted-Pair Leitungen sind, genutzt werden. Somit ist eine kostengünstige und bereits vorhandene Installationsverkabelung für eine TETRA-Gleichwellen-Funknetzvorrichtung nutzbar. Vorteilhaft entspricht die Twisted-Pair Leitung einer Kategorie 2 oder höher (Cat-2), so dass maximale Frequenzen von 1-1,5 MHz oder höher übertragbar sind.

In einer vorteilhaften Ausführungsform kann eine maximale systembedingte Signallaufzeit über die Kommunikationsverbindung zwischen einer Funkzelleneinrichtung und der Steuereinrichtung 1000 µs oder weniger, insbesondere 100 µs betragen. Ein zeitlicher Versatz von weniger als 100 µs als systembedingte Signallaufzeit eines Gleichwellenfunknetzes wird von einem TETRA-Endgerät als akzeptables Signal empfangen und dekodiert.

Eine Gleichkanalstörung generiert durch einen möglichen Mehrwegempfang aufgrund der Gleichwellenstruktur von <= 10 µs ermöglicht einem TETRA-DMO-Repeater / einer TETRA-Basisstation aus einem Rx-HF-Summensignal der Rx-Signale aller Funkzelleneinrichtungen ohne Diversity oder komplexer Auswerteeinheit ein optimales Rx-Signal zu verstärken und ohne Verzerrung als Tx-Signal an alle Funkzelleneinrichtungen weiterzuleiten. Gleichkanalstörungen > 10 µS können vorteilhafterweise durch eine Empfangsdiversity erkannt und durch Selektion des qualitativ hochwertigsten Signals unterdrückt werden. In einer vorteilhaften Ausführungsform bewertet die Empfangsdiversity zeitschlitzbasiert die Rx-Signale um einem TETRA-DMO-Repeater und/oder einer TETRA-Basisstation die korrekten Daten zur Verfügung zu stellen. Die Aussendung des Tx-Signals ist um das Äquivalent der physikalischen Länge der jeweiligen Signalleitung zu verzögern, um kohärente Signale an jeder Funkzelleneinrichtung auszustrahlen, womit ein TETRA-Endgerät eine fehlerfreie Dekodierung durchführen kann.

In einer vorteilhaften Ausführungsform kann das ZF-Kommunikationssignal, das auf der Kommunikationsverbindung übertragen wird, ein ZF-Signal in einem Frequenzbereich von 10 kHz bis 10 MHz, bevorzugt 50 kHz bis 1 MHz, insbesondere 80 kHz sein. Denkbar ist eine Signalübertragung auch im Basisband, d.h. in dem Basisband der Modulationssignale, bevorzugt phasen- und amplitudenmodulierte Signale, insbesondere π/4DQPSK modulierte Signale. In den vorgenannten Frequenzbereichen kann eine drahtgebundene Signalübertragung, insbesondere über Kupferkabel über längere Strecken mit geringen Verlusten gewährleistet werden, so dass bestehende Verbindungsleitungen verwendet werden können.

Es empfiehlt sich, nach dem HF/ZF-Umsetzen die Signale zu verstärken und die zu übertragenen Signale über die Kommunikationsverbindung bevorzugt auf ein Ausgangslevel von 37 dBm oder mehr anzuheben. Des Weiteren empfiehlt es sich, vor dem HF/ZF-Heruntersetzen eine Signaldynamikanpassung des Signals vorzunehmen, um dem Dynamikbereich des Mischers nicht zu übersteuern. Hierzu kann beispielsweise ein Dämpfungsglied eingesetzt werden, um einen Dynamikbereich des Umsetzers von 40 dB auf bis zu 140 dB zu erhöhen. Auch kann ein AGC-Glied (Automatic Gain Control) mit vorgeschaltetem variablem Dämpfungsglied eingesetzt werden, um eine Übersteuerung des Umsetzers zu verhindern. Der Dynamikbereich des TETRA-Endgerätes kann somit komplett über die Gleichwellenstruktur übertragen werden.

Grundsätzlich kann ein Heruntermischen des HF-Signals auf ein ZF-Band bzw. das entsprechende Hochmischen durch einen einstufigen Mischer erfolgen. Dies hat allerdings den Nachteil, dass entstehende schmalbandige Nebenfrequenzbänder nur mit hohem Aufwand ausgefiltert werden können. Aufgrund der Forderungen einer extrem geringen Systemlaufzeit ist ein derartiges Filter nur schwer umsetzbar. In einer vorteilhaften Ausführungsform kann der HF/ZF-Umsetzer und/oder der ZF/HF-Umsetzer eine zweistufige Mischerstufe umfassen, um HF-Signale auf ein ZF-Band herunter bzw. ZF-Signale auf ein HF-Band hochzumischen, wobei bevorzugt die zweite Mischerstufe des HF/ZF-Umsetzers und des ZF/HF-Umsetzers denselben Oszillator verwendet. Durch eine zweistufige Mischerstufe wird ein HF-Signal durch zwei Mischerstufen auf ein ZF-Signal heruntergemischt, so dass beispielsweise eine erste Stufe von 385 MHz auf 5 MHz und eine zweite Stufe von 5 MHz auf 200 kHz heruntermischen (bzw. heraufmischen kann). Hierdurch kann eine effiziente Signalfilterung beispielsweise zwischen erster und zweiter Stufe durchgeführt werden, um unerwünschte Mischer-Nebenbänder auszufiltern. Die benötigten Frequenzgeneratoren müssen hohe Qualitätsanforderungen erfüllen, um einen asynchronen Frequenzdrift zwischen der Steuereinrichtung sowie der Funkzelleneinrichtung zu verhindern, was zu einer starken Signalverzerrung führen würde, welche durch die TETRA-Endgeräte nicht ausgeregelt werden kann. Hierbei ist eine Frequenzstabilität der eingesetzten Frequenzgeneratoren von 0,03 ppm oder weniger wünschenswert, d.h. bei einer Mio. Hz wird ein Frequenzdrift von 0,03 Hz toleriert. Hochwertige LNA-Verstärkerstufen vor der ersten Stufe sind notwendig um einen extrem geringen Rauschbeitrag durch die Gleichwellenstruktur zu erzeugen, um die Empfindlichkeitsgrenze möglichst gering zu halten, zwischen erster und zweiter Stufe oder nach der zweiten Stufe eingesetzt werden. Eine Rauschzahl der LNAs von 0,6 dB oder weniger ist hierbei wünschenswert und vorteilhaft. Der HF//ZF-Frequenzherabsetzungs-Umsetzer und der ZF/HF-Frequenzheraufsetzungs-Umsetzer können dieselben Frequenzgeneratoren nutzen, so dass ein identisches Mischverhalten erreicht und Bauteile eingespart werden können.

Grundsätzlich kann das empfangene HF-Signal auf analogem Wege auf ein ZF-Band heruntergemischt und übertragen werden. In einer vorteilhaften Ausführungsform kann das ZF-Kommunikationssignal, das auf der Kommunikationsverbindung übertragen wird, ein digitalcodiertes Signal sein, dass eine digitale Abtastung des ZF-Signals oder eine digitale Abtastung des HF-Signals mit nachgeschalteter digitaler Reduktion auf einen reduzierten ZF-Digitaldatenstrom ist. So kann ein Hochgeschwindigkeits-A/D-Wandler, beispielsweise ein ΣΔ-Wandler das HF-Signal abtasten, und das digitale Signal kann durch signaltheoretische Verfahren auf eine niedrigere Datenrate herabgesetzt und gegebenenfalls mittels digitalen Filtern bearbeitet werden. Hierdurch wird eine direkte Signal-Synthese erreicht, wobei die HF-Komponenten auf ein Minimum reduziert werden können, und der entstehende hohe digitale Verarbeitungsaufwand durch kostengünstige Digitalhardware geleistet werden kann. So kann ein digitaler Datenstrom über die Kommunikationsverbindung zur zentralen Steuereinrichtung übertragen, und dort auf reziproker Weise wieder auf ein analoges HF-Signal heraufgesetzt und gewandelt werden. Durch die robuste Übertragung von digitalen Daten können Kommunikationsverbindungen minderer Qualität und einfache Leitungstreiber genutzt werden. Eine Filterung des ZF-Signals kann mittels digitaler Filter genutzt werden. Die A/D-Wandlung extrahiert keine im Signal enthaltenen Nutzdaten sondern setzt lediglich das HF-Antennensignal auf einen digitalen niederfrequenten Datenstrom um, so dass eine Verschlüsselung und Unantastbarkeit der Daten gewährleistet bleibt und die Signalqualität des HF-Signals vollständig erhalten bleicht. Es kann auf hochwertige teure Analogkomponenten verzichtet werden.

In einer vorteilhaften Ausführungsform kann jede Funkzelleneinrichtung einen Rx/Tx-Splitter und die Steuereinheit einen Rx/Tx-Combiner umfassen, die als Frequenzweiche oder als signallaufrichtungsabhängiger Zirkulator ausgelegt sind. Der Splitter und Combiner haben die Aufgabe, aus dem HF-Signal des Antennennetzwerkes ein getrenntes Rx und Tx HF-Signal bereitzustellen, bzw. aus den getrennten Rx und Tx HF-Signal ein kombiniertes Antennensignal zur Einspeisung in den HF-Eingang des TETRA-DMO-Repeaters bzw. der TETRA-Basisstation der Steuereinrichtung zu bilden. Grundsätzlich arbeiten Splitter und Combiner reziprok und bidirektional. Da typischerweise, insbesondere im DMO 1b und 2 Mode ein Rx- und Tx-Signal in verschiedenen Frequenzbändern und zumeist in π/4 DQPSK-Modulation übertragen werden, lassen diese sich durch eine schmalbandige Frequenzweiche trennen. Alternativ kann ein Zirkulator eingesetzt werden, der ein Signal je nach Signallaufrichtung auf die verschiedenen Ports aufteilt. Dieser verwendet die Richtwirkung der Tx und Rx-Signale zur Signaltrennung, wobei ein Zirkulator insbesondere im DMO Modus 1a eingesetzt werden kann, bei dem Sende- und Empfangskanal in einem Frequenzband und lediglich durch ein TDMA-Verfahren separiert sind.

Grundsätzlich kann der TETRA-DMO-Repeater bzw. die TETRA-Basisstation über eine interne Fading-Regelung, die in der Lage ist, Interferenzsignale auszublenden, aus einem Rx-Summensignal das bestmögliche Rx-Signal ausfiltern und verarbeiten. In einer vorteilhaften Ausführungsform kann der ZF/HF-Umsetzer der Steuereinrichtung eine Selektions-Diversityeinheit im Rx-Zweig umfassen, die das qualitativ beste Rx-Empfangssignal als zu verarbeitendes Signal auswählt, wobei die Selektions-Diversityeinheit bevorzugt das ZF-Signal auswählt. Die Diversityeinheit kann aus den empfangenen Rx-Signalen aller Funkzelleneinheiten dasjenige mit der höchsten Empfangsqualität, z.B. mit dem besten SNR-Abstand, dem höchsten Pegel etc. auswählen, so dass nur dieses Signal als HF-Signal heraufgesetzt und durch den Repeater / die Basisstation verstärkt wird. Somit werden Signalverzerrungen und Interferenzprobleme vermieden und die Gleichwelle sendet lediglich ein ausgewähltes Rx-Signal ab.

TETRA Kommunikationssignale sind in Regel zeitschlitzbasiert. Es ist vorteilhaft denkbar, dass die Diversityeinheit jeden einzelnen Zeitschlitz der verschiedenen Rx-Zweige analysiert, und für jeden Zeitschlitz den Rx-Zweig mit der höchsten Empfangsqualität auswählt. Somit kann die Diversityeinheit zeitschlitzbasierte Informationspakete dynamisch von verschiedenen Funkzelleneinrichtungen auswählen, um ein qualitativ optimiertes Rx-Signal zur Weitergabe an den Repeater bzw. Basisstation bereitzustellen. Somit ist die kleinste, auswählbare Information eine Zeitschlitzinformation des TETRA-Signals.

In einer vorteilhaften Ausführungsform kann der HF/ZF-Umsetzer der Steuereinrichtung eine Netzwerk-Anpassungseinheit im Tx-Zweig umfassen, die eine Laufzeitverzögerung, Phasenanpassung und/oder Pegelanpassung des abzustrahlenden Tx-Signals, bevorzugt des ZF-Signals vornimmt. Des Weiteren kann ebenfalls vorteilhaft der HF/ZF-Umsetzer einer Funkzelleneinrichtung eine Netzwerk-Anpassungseinheit im Rx-Zweig umfassen, die eine Laufzeitverzögerung, Phasenanpassung und/oder Pegelanpassung und/oder Impedanzanpassung des empfangenen Rx-Signals, bevorzugt des ZF-Signals vornehmen kann. Eine Anpassungseinheit kann eine Leitungsimpedanz von beispielsweise 50 Ω auf eine Netzwerkimpedanz von beispielsweise 600 Ω um. Somit werden Übertragungsverluste und Leitungsreflexionen verhindert.

Im DMO-Betrieb kann in einer vorteilhaften Ausführungsform kann der TETRA-DMO-Repeater die Betriebsart 1a und 1b bereitstellen. Während in der 1a Betriebsart ein Signalträger sowohl für das Tx wie auch das Rx-Signal verwendet wird, nutzt Betriebsart 1b und 2 zwei Frequenzbänder für Rx & Tx. Unterstützt der Repeater sowohl einen Simplex- als auch einen Duplexbetrieb, so ist die Gleichwellen-Funknetzvorrichtung vielfältig einsetzbar. Es kann hierzu vorteilhaft sein, bei der Umschaltung zwischen Betriebsart 1a und 1b den Combiner/Splitter von einer Zirkulatorkomponente auf eine Frequenzweichenkomponente umzuschalten, um Rx- von Tx-Signal zu trennen.

In einer vorteilhaften Ausführungsform kann im HF/ZF Umsetzer und im ZF/HF-Umsetzer zumindest einer Funkzelleneinrichtung und der Steuereinheit zumindest eine Verstärkerstufe in der HF-Seite und/oder ZF-Seite zur Kompensation von Verlusten umfasst ist. Durch Zwischenverstärker kann die Signalqualität erhalten und größere Leitungswege überbrückt werden.

In einer vorteilhaften Ausführungsform kann ein symmetrisiertes Rx- und Tx-Signal jeweils auf einer 2-Drahtleitung der Kommunikationsverbindung übertragen werden. So kann die Anpassungseinheit das über die Kommunikationsverbindungsleitung zu übertragende Signal symmetrisieren, so dass insbesondere bei langen Leitungslängen eine störungsarme Übertragung sichergestellt werden kann. In einer Mehrdrahtleitung, insbesondere eine 4-Drahtleitung für ein Rx- und ein Tx-Signal können weitere Informationen, insbesondere Phaseninformationen mit übertragen werden.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen

Es zeigen:
- **Fig. 1**: in schematischer Darstellung einen TMO- und DMO-Betrieb eines Bündelfunksystems;
- **Fig. 2**: eine analoge Gleichwellen-Funknetzvorrichtung des Stands der Technik;
- **Fig. 3**: schematisch eine funkdigitale TETRA-TMO-Funkzelleneinrichtung mit angeschlossenem LWL-Hub als Steuereinrichtung einer digitalen Gleichwellen-Funkvorrichtung mit einer Antenne bzw. einem Antennennetzwerk des Stands der Technik;
- **Fig. 4**: schematisch eine TETRA Gleichwellen-Funknetzvorrichtung mit einem TETRA-Repeater in jeder Funkzelleneinrichtung nach dem Stand der Technik;
- **Fig. 5**: eine schematische Überblicksdarstellung einer TETRAGleichwellenvorrichtung eines ersten Ausführungsbeispiels;
- **Fig. 6**: schematisch ein zweites Ausführungsbeispiels der Erfindung;
- **Fig. 7**: Blockschaltbild einer Steuereinrichtung eines Ausführungsbeispiels der Erfindung;
- **Fig. 8**: Blockschaltbild alternativer Komponenten eines Ausführungsbeispiels einer Steuereinrichtung;
- **Fig. 9**: Detailbeschreibung einzelner Komponenten eines Ausführungsbeispiels einer Steuereinrichtung;
- **Fig. 10**: Blockschaltbild einer Funkzelleneinrichtung eines Ausführungsbeispiels der Erfindung;
- **Fig. 11**: Blockschaltbild alternativer Komponenten eines Ausführungsbeispiels einer Funkzelleneinrichtung;
- **Fig. 12**: Detailbeschreibung einzelner Komponenten eines Ausführungsbeispiels einer Funkzelleneinrichtung.

In den Figuren sind gleiche oder gleichartige Komponenten mit gleichen Bezugszeichen beziffert.

Die **Fig. 1a** und **1b** zeigen schematisch das Prinzip eines TMO- bzw. DMO-Betriebs eines Bündelfunkssystems nach dem Stand der Technik. Im TMO-Betrieb sendet eine TETRA-Basisstation (BTS - Base Transceiver Station) ein Funksignal zu einem Funkkommunikations-Endgerät 01. Hierzu kann die BTS-Station 02 nur innerhalb ihrer Antennen-Abstrahlreichweite 04 Signale empfangen bzw. aussenden. Wird eine Kommunikation zu entfernt befindlichen Funkkommunikations-Endgeräten 01 gewünscht, so kann die BTS 02 über beispielsweise eine gerichtete Funkfernverbindung einen Funknetz-TMO-Repeater 03 ansprechen, der innerhalb seiner Antennen-Abstrahlreichweite 04 insbesondere auf einer anderen Frequenz das entfernt befindliche Funkkommunikations-Endgerät 01 ansprechen kann. Der TMO-Repeater 03 ist in der Lage, die Netztopologie und die Trunked-Mode-Bündelfunkdienste in einem von der BTS 02 nicht erreichten Abstrahlgebiet zur Verfügung zu stellen.

Dahingegen zeigt **Fig. 1b** einen DMO-Repeaterbetrieb, bei dem ausgehend von einem ersten Funkkommunikations-Endgerät 01 eine Direktkommunikation mit einem zweiten Funkkommunikations-Endgerät 01 über einen DMO-Repeater 21 hergestellt wird. Der DMO-Repeater 21 befindet sich in Abstrahlreichweite des ersten Endgeräts 01. Das zweite Funkkommunikations-Endgerät 01 befindet sich zwar nicht in der Antennen-Abstrahlreichweite 04 des ersten Endgeräts 01, jedoch ebenfalls in der Abstrahlreichweite des DMO-Repeaters 21. Das erste Endgerät 01 sendet sein Sendesignal innerhalb seiner Abstrahlreichweite 04, dieses wird vom DMO-Repeater 21 empfangen und verstärkt in der Abstrahlreichweite 04 des Repeaters 21 abgestrahlt. Somit sendet der Repeater 21 das empfangene Signal in den DMO-Betrieb unmittelbar weiter, und kann somit innerhalb seiner Antennen-Abstrahlreichweite 04 das zweite und gegebenenfalls beliebig viele Funkkommunikations-Endgeräte 01 erreichen, die dann alle an der DMO-Kommunikation beteiligt sind. Umgekehrt kann das zweite Endgerät 01 aufgrund der Reziprozitätsbeziehung ebenfalls über den DMO-Repeater 21 direkt mit dem ersten Endgerät 01 kommunizieren, so dass der Repeater 21 eine Relaisfunktion erfüllt.

Die **Fig. 2** zeigt eine aus dem Stand der Technik bekannte analoge Gleichwellen-Funknetzvorrichtung zur Versorgung und Aufrechterhaltung einer analogen Funkkommunikation innerhalb eines Gebäudes. Hierzu sind an einer Funksteuereinrichtung 06, die als Master bezeichnet wird, mittels 4-Draht-Leitungen, die eine steuernde Kommunikation ermöglichen, drei analoge DMO-Repeater 08 angeschlossen. Jeder analoge DMO-Repeater 08 umfasst ein Antennennetzwerk 09 zum Empfang und zur synchronisierten Abstrahlung von Signalen von bzw. zu einem nicht dargestellten Endgerät 01. Wird über das Antennennetzwerk 09 ein Signal eines Funkkommunikations-Endgerätes 01 empfangen, so wird dieses über den analogen DMO-Repeater 08 und die 4-Draht-Steuerleitung 07 an die Mastersteuereinrichtung 06 übermittelt. Diese wertet die Empfangsfeldstärke bzw. die Qualität des analogen Signals aus, und wählt diejenige Funkzelleneinrichtung 08, die das qualitativ hochwertigste Empfangssignal liefert, als Empfangsfunkzelle aus. Qualitativ hochwertig bedeutet in diesem Zusammenhang einen hohen Signalrauschabstand und geringstmögliche Störungen der Sprachkommunikation, die nach einem aus dem Stand der Technik bekannten Verfahren bestimmt werden können. Daran anschließend übermittelt die Mastersteuereinheit 06 das empfangene Signal als Sendesignal synchronisiert an alle angeschlossenen Funkzelleneinrichtungen 08, damit diese dem Gleichwellenprinzip folgend eine synchrone Abstrahlung über ihre Antennennetzwerke 09 vornehmen können. Auf diesem Wege wird ein empfangenes Funkkommunikationssignal innerhalb des gesamten Gebäudes weitergeleitet, sodass alle im Gebäude befindlichen Kommunikations-Endgeräte 01 erreicht werden können.

In der **Fig. 3** ist eine TETRA-Repeater-Antennennetzwerktopologie schematisch dargestellt, in der mehrere TETRA DMO-Repeater 10 für einen TMO-Betrieb über ein LWL-Kabelnetz 15 an einen LWL-Hub angeschlossen sind, der wiederum mit einer nicht dargestellten BTS 01 verbunden ist. Somit lässt sich ein TETRA-TMO-Repeaternetzwerk schaffen, um insbesondere Tunnel oder unterversorgte Gebiete und größere Anlagen mittels mehrerer mit einer BTS verbundener HF-Repeater 10 zu versorgen. Jedoch benötigt ein solches Tetra-TMO-Repeaternetzwerk eine hohe Frequenzbandbreite, entsprechenden Hardwareaufwand, der sich in sehr hohen Anschaffungs- und Betriebskosten widerspiegelt, und ist für eine BOS-Gebäudeversorgung, für die ein DMO-Betrieb ausreichend ist, schlichtweg überdimensioniert und zu teuer.

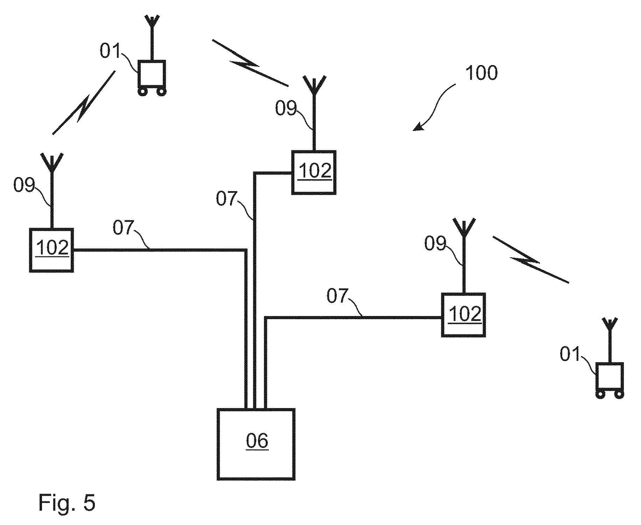

Aus dem Stand der Technik ist eine in **Fig. 4** schematisch dargestellte DMO-Gleichwellen-Funknetzvorrichtung bekannt, die in der EP 2 280 497 A1 beschrieben ist. Die Gleichwellen-Funknetzvorrichtung 18 umfasst drei als TETRA-DMO-Repeater ausgebildete Funkzelleneinrichtungen 10, die über eine 4-Draht Kabelverbindung 07 mit einer Steuereinrichtung 06, verbunden sind. Zur Kommunikation zwischen den Funkzelleneinrichtungen 10 und der Steuereinrichtung 06 wird eine analoge Signalverarbeitung eingesetzt. Eine Austausch von Sprach- und Nutzsignalen führt typischerweise Qualitätsverschlechterungen mit sich, wobei "veraltete" Technik genutzt wird, um eine synchronisierte Abstrahlung zu erreichen, jedoch werden geringe Hardwareanforderungen gestellt, und es kann auf bewährte und günstig zur Verfügung stehende Technik zurückgegriffen werden, um eine einfache Umrüstung bereits vorhandener analoger Anlagen ermöglicht. Die drei DMO-TETRA-HF-Repeater 10 sind mit einer von der Steuereinheit 06 umfassten Empfangsdiversity 19, die zum Erkennen des qualitätsbesten Empfangssignals und Bestimmen einer Empfangsfunkzelle sowie zur synchronen Weiterleitung des empfangenen Signals als analoges Sendesignal synchronisiert zu den Funkzelleneinrichtungen 10 ausgelegt ist, verbunden. Somit kann ein solches TETRA-DMO-Gleichwellensystem eine bereits vorhandene Infrastruktur, umfassend Leitungsverbindungen 04, Steuereinrichtung 06 und Empfangs-Diversity 19, eines analogen Gleichwellensystems nutzen. Die TETRA-Funktionalität ist den Funkzelleneinrichtungen 10 integriert, wobei eine Synchronität zwischen den Funkzelleneinrichtungen10 nur schwer erreichbar ist, da die TETRA-Repeater jeder Funkzelleneinrichtung unabhängig arbeiten und sich gegenseitig stören können. Die Steuereinrichtung 06 dient lediglich zur Verteilung des abzustrahlenden Signals, wobei Laufzeitverzögerungen berücksichtigt werden können. Es treten erhebliche Laufzeitverzögerungen durch die Extraktion der Sprach- und Datensignale aus dem HF-Signal auf, und die Funknetzvorrichtung kann nur mit erheblichem Aufwand eine stabile Gleichwellenkommunikation gewährleisten. In der **Fig. 5** ist ein erstes Ausführungsbeispiel einer erfindungsgemäßen Gleichwellen-Funknetzvorrichtung 100 dargestellt. Diese umfasst drei Funkzelleneinrichtungen 102, die jeweils ein Antennennetzwerk 09 bzw. eine Antenne aufweisen. Jede Funkzelleneinrichtung 102 ist über eine drahtgebundene Kommunikationsverbindung 07 mit einer zentralen Steuereinrichtung 07 verbunden. Zwei Funkkommunikations-Endgeräte 01 sind in Sendereichweite zumindest einer Funkzelleneinrichtung 102. Ein von einem Endgerät 01 ausgesendetes Rx-Signal wird von zumindest einer Funkzelleneinrichtung 102 empfangen, die das Rx-Signal vom HF-Frequenzband in ein ZF-Frequenzband
heruntersetzt, und über die Kommunikationsverbindung 07 an die Steuereinrichtung 06 übermittelt. In der Steuereinrichtung 06 wird das Signal verarbeitet und an alle Funkzelleneinrichtungen 102 zur simultanen Abstrahlung weitergeleitet. Wird ein Rx-Signal eines Endgerätes 01 von zwei oder mehreren Funkzelleneinrichtungen 102 empfangen, wird das Rx-Signal von den Funkzelleneinrichtungen 102 parallel zur Steuereinrichtung 06 weitergeleitet. Die Steuereinrichtung 06 verstärkt das qualitativ hochwertigste Rx-Signal als Tx-Signal zur abstrahlenden Weiterleitung an die Funkzelleneinrichtungen 102, so dass alle Endgeräte 01 in Empfangsreichweite das Tx-Signal empfangen können.

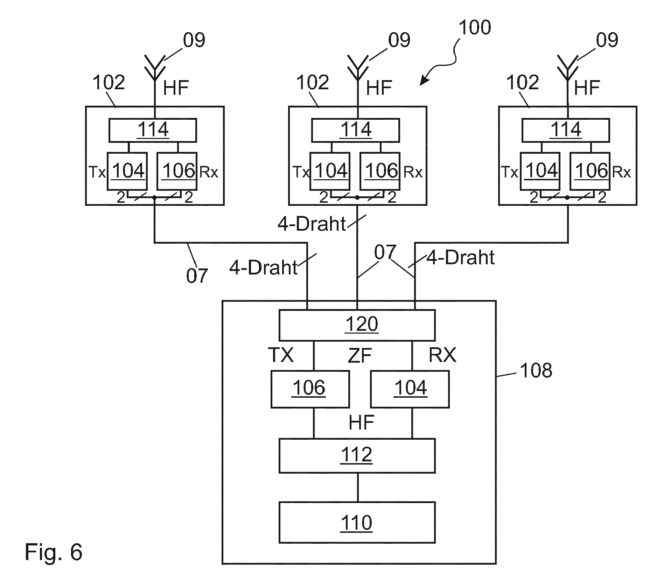

Die **Fig. 6** stellt ein Blockschaltdiagramm ein weiteres Ausführungsbeispiel einer Gleichwellen-Funknetzvorrichtung 100 dar. Drei Funkzelleneinrichtungen 102 sind über 4-Drahtleitungen 07 mit einer zentralen Steuereinrichtung 108 verbunden. Jede Funkzelleneinrichtung 102 ist mit einem Antennennetzwerk 09 ausgerüstet, die empfangene Rx HF-Signale an einen Rx/Tx-Splitter 114 leitet und von diesem abzustrahlende Tx HF-Signale erhält. Der Rx/Tx-Splitter 114 spaltet das HF-Signal in ein Rx- und Tx-Signal auf. Das Rx HF-Signal wird durch ein HF/ZF-Umsetzer in ein Zwischenfrequenzband umgesetzt, so dass das Rx ZF-Signal über die 4-Drahtverbindung 07 zur Steuereinrichtung 108 weitergeleitet werden kann. Werden über die Verbindung 07 Tx-ZF-Signale über zwei der vier Drähten empfangen, werden diese durch einen ZF/HF-Umsetzer 104 in ein Tx HF-Signal umgesetzt, in der Regel hochgemischt. Das Tx HF-Signal wird im Rx/Tx-Splitter 114 mit dem HF Rx-Signal kombiniert, und an das Antennennetzwerk 09 weitergeleitet.

Das im ZF-Band herabgesetzte Rx-Signal wird von der Funkzelleneinrichtung 102 an die Steuereinrichtung 108 weitergeleitet. Eine Diversityeinheit 120 der Steuereinrichtung 108 wählt aus den Rx ZF-Signalen der Funkzelleneinrichtungen 102 das signalstärkste Signal aus, und leitet dieses an einen ZF/HF-Umsetzer 104 weiter. Der Umsetzer 104 setzt das Rx ZF-Signal in ein Rx HF-Signal um und führt dieses einem Rx/Tx-Combiner 112 zu. Der Combiner führt das Rx und Tx HF-Signal einem HF-Port des TETRA-DMO-Repaters 110 zu, der üblicherweise als Antennenanschluss dient. Der Repeater 110, der gleichwohl für einen TMO als TETRA-Basisstation ausgebildet sein kann, verstärkt das Rx HF-Signal und gibt dieses als Tx HF-Signal aus. Der Combiner 112 teilt das Tx HF-Signal vom Rx HF-Signal ab und führt dieses einem HF/ZF-Umsetzer 106 zu. Der Umsetzer setzt das Tx Signal auf einen ZF-Trägerband um, so dass das Tx-Signal über zwei der vier Drähte der Verbindung 07 an alle Funkzelleneinrichtungen 102 zur synchronen Gleichwellenabstrahlung weitergeleitet werden kann.

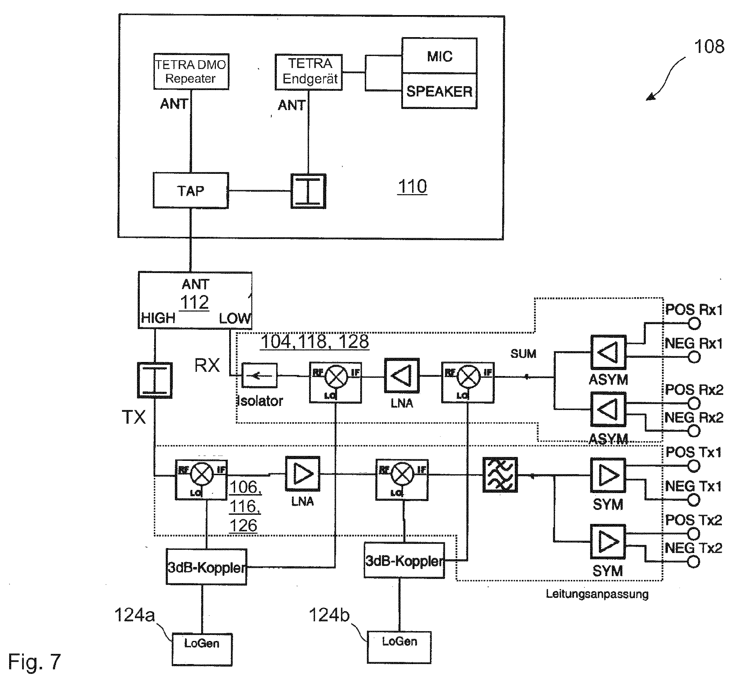

Die **Figs. 7** bis **9** stellen mögliche Ausführungsformen einer Steuereinrichtung 108 entsprechend der Erfindung als Blockschaltdiagramme dar. Die Steuereinrichtung 108 der **Fig. 7** umfasst einen TETRA-DMO Repeater 110 mit einem TETRA DMO-Repeatergerät und einem über einem HF-Dämpfungsglied am Antenneneingang angekoppelten TETRA-Endgerät, dass ein Mikrophon und einen Lautsprecher zur zentralen Einsprache in das Gleichwellenfunknetz umfasst. Der Repeater 110 ist über einen Rx/Tx-Combiner 112 mit einem ZF/HF-Umsetzer 104 des Rx-Pfades und einen HF/ZF-Umsetzer 106 des Tx-Pfades über ein -20dB Dämpfungsglied verbunden. Beide Umsetzer 104, 106 dienen dazu, das empfangen Rx NF-Signal auf ein TETRA-konformes HF-Band hochzusetzen, bzw. das Tx HF-Signal auf ein über die Verbindung 07 übertragbares NF-Band herabzusetzen. Zwei Lokaloszillatoren 124a, 124b betreiben den zweistufigen Mischer 126, 128 der Mischerstufe 116, 118, um durch Mischerfrequenzen 385 MHz und 5 MHz eine HF von 380 /390 MHz auf 200kHz ZF herabzusetzen. In den Umsetzern 104, 106 sind rauscharme Zwischenverstärker LNA und Frequenzfilter eingesetzt, und beim Auskoppeln aus der Verbindungsleitung 07 wird das Signal Desymmetrisiert bzw. beim Einkoppeln wird das Signal symmetrisiert und auf einen Leitungsimpedanz von 600 Ω angepasst. Anstelle eines Repeaters 110 für den DMO-Betrieb kann in gleicher Weise eine Basisstation für einen TMO-Betrieb eingesetzt werden.

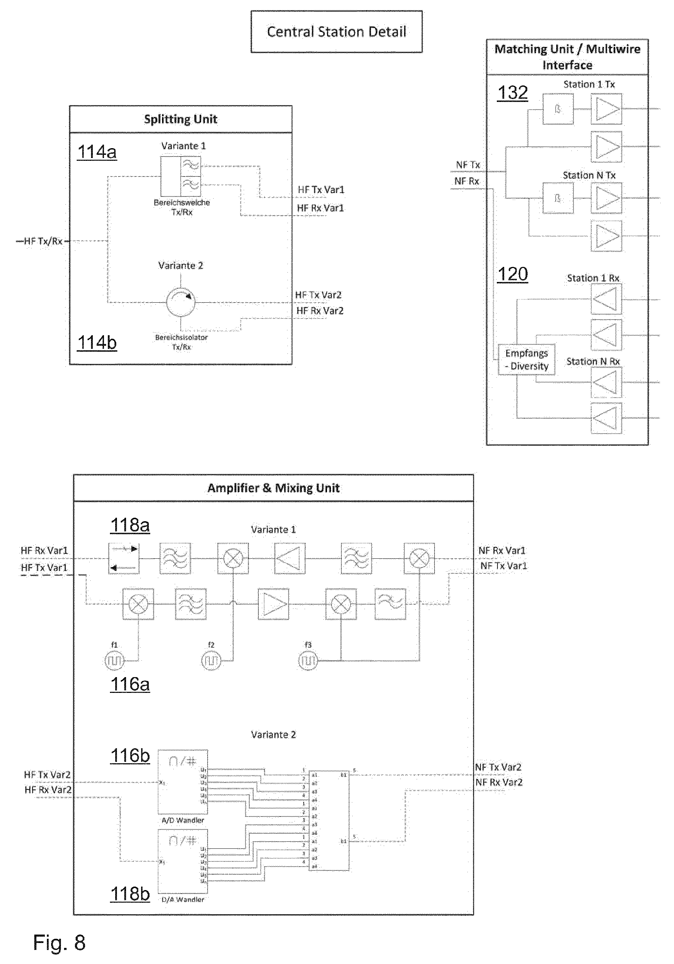

In der **Fig. 8** sind Ausführungsformen der einzelnen Komponenten eines Ausführungsbeispiels 108 einer Steuereinrichtung dargestellt. So zeigen die drei Blöcke der Fig. 8 jeweils alternative Ausführungen eines Rx/Tx-Splitters 114, einer Empfangsdiversity 120 und einer Anpassungseinheit 132 sowie eines HF/NF-Down-Mixers 116. Ein Rx/Tx-Splitter 114 kann als Frequenzweiche 114a ausgebildet sein, um ein Rx-Signal von einem Tx-Signal, die in verschiedenen Frequenzlagen übertragen werden, zu trennen, wie dies in den DMO-Betriebsarten 1 b & 2 der Fall ist. Alternativ kann insbesondere in der Betriebsart 1a ein Zirkulator eingesetzt werden, der signalrichtungsabhängig Signale an verschiedene Ports leitet. Eine Empfangsdiversity 120 wählt das Rx ZF-Signal mit dem höchsten Pegel nach einer Asymmetrierung des Rx-Signals aus und eine Anpassungseinheit 132 passt die Leitungsimpedanz und Phasenwinkel zur Anpassung an verschiedene Signallaufzeiten an, wonach eine Symmetrisierung des Signals zur 2-Drahtübertragung vorgenommen wird. Eine Signalumsetzung vom HF in ein ZF Frequenzband kann durch einen NF/HF-Up-Mixer 116 bzw. HF/NF-Down-Mixer 118 entsprechend der dargestellten Varianten 118a/118b und 116a/116b erfolgen. In den Varianten 116a/118a sind zweistufige Mischerstufen dargestellt, wobei die zweite Mischerstufe jeweils einen gemeinsamen Oszillator f3 nutzen, und in den Zwischenstufen Filter und LNA-Verstärker eingeschaltet sind. In den Varianten 116b/118b werden die NF-Signale digital übertragen und über eine Logikstufe in ein hochfrequentes digitales Signal heraufgemischt, und mittels schnellen A/D-Digitalwandlern in entsprechende Rx/Tx HF-Signale gewandelt. Somit können auf den Verbindungsleitungen digital abgetastete ZF-Signale oder heruntergemischte ZF-Signale der Rx/Tx-Signale übertragen werden.

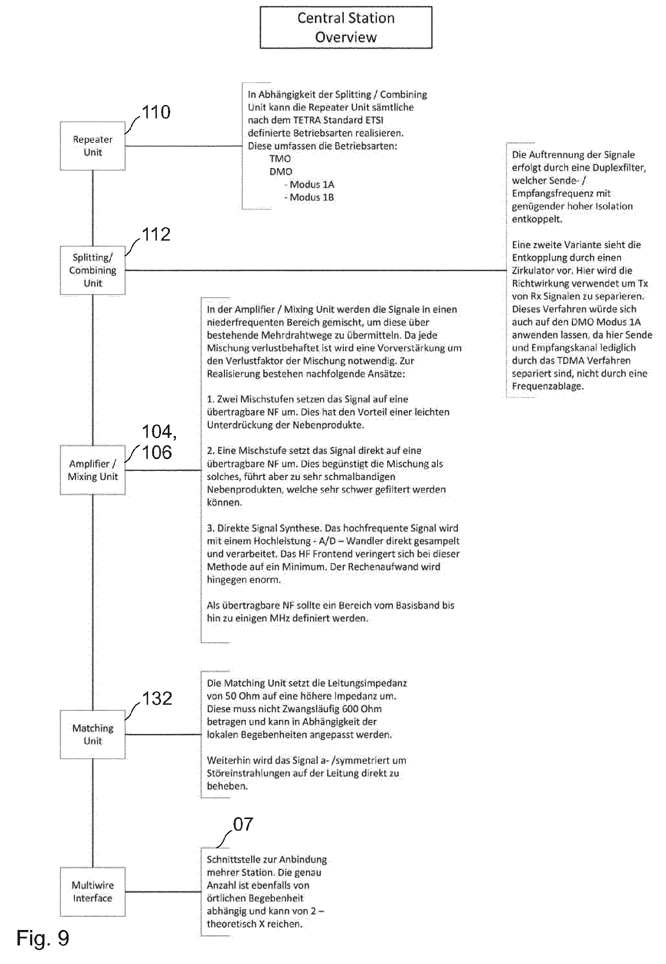

Die **Fig. 9** beschreibt in einer Diagrammdarstellung weitere Details von Ausführungsformen einer Steuereinrichtung 108, insbesondere des TETRA-Repeaters 110, des Combiners 112, der Mischer 116, 118 und der Anpassungseinheit 132.

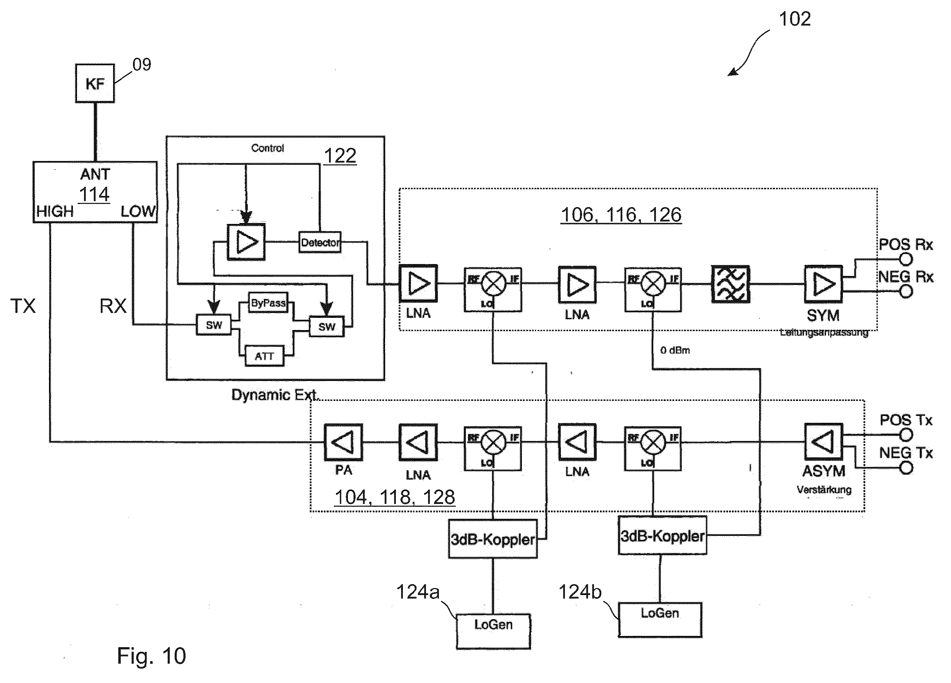

In vergleichbarer Weise wie die Darstellung diverser Ausführungsbeispiele der zentralen Steuereinrichtung in den **Figs. 7 bis 9** beschreiben die Blockschaltdiagramme der **Figs. 10 bis 12** Ausführungsbeispiele einer Funkzelleneinrichtung 102. Anstellen eines Repeaters 110 lässt sich für einen TMO-Betrieb eine TETRA Basisstation vorsehen. Es ist denkbar, in der Steuereinrichtung sowohl einen DMO-Repeater 110 als auch eine Basisstation vorzusehen, um eine unversell nutzbare Steuereinrichtung 108 bereitzustellen.

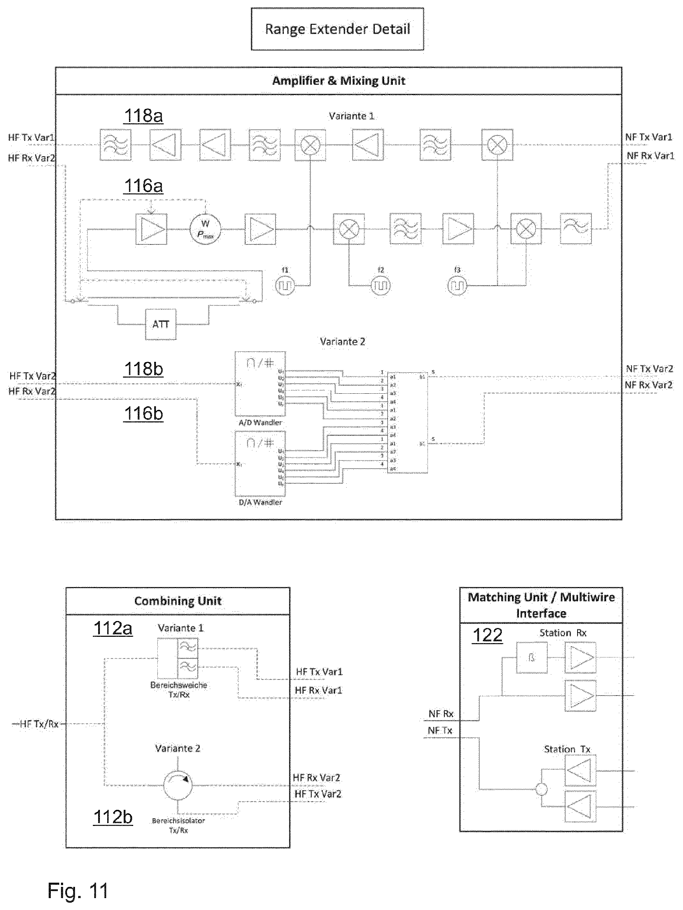

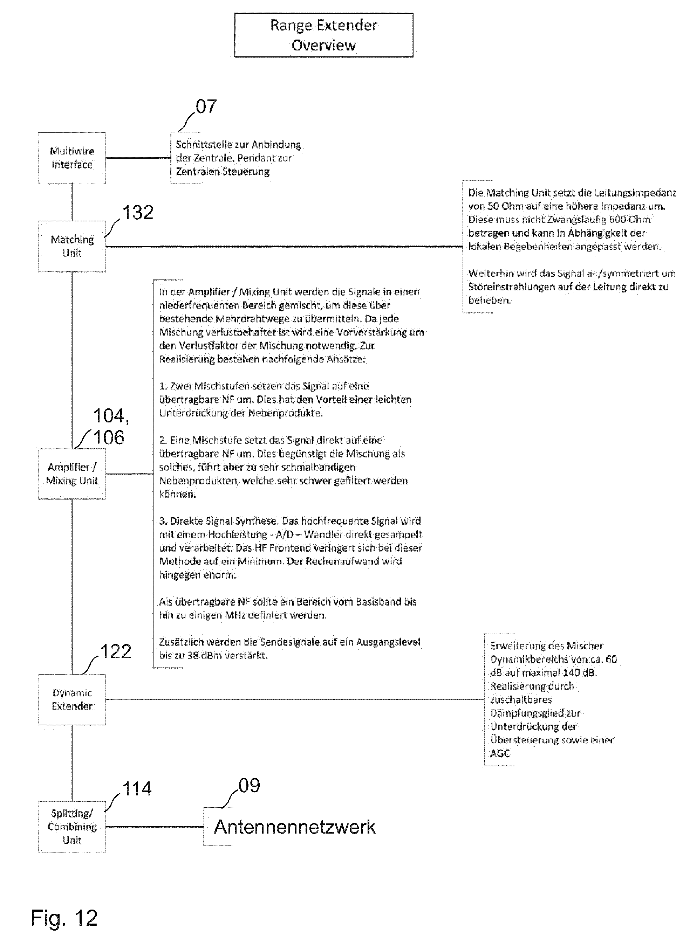

In der **Fig. 10** ist als Blockschaltbild eine Ausführungsform einer Funkzelleneinrichtung 102 dargestellt. Diese umfasst ein Antennennetzwerk 09, das an einen Rx/Tx-Combiner 112 angeschlossen ist. Der Combiner 112 fasst das Rx HF-Signal und Tx HF-Signal zum Betrieb des Antennennetzwerks 09 zusammen bzw. trennt ein Antennensignal in diese beiden Signale auf. Mögliche Ausführungsformen des Combiners 112 sind in den Figs. 11 und 12 beschrieben. Ein Rx-HF-Signal wird durch eine Dynamikregelung 122, die eine Pegelregelung umfasst, um den Dynamikbereich des Empfangssignals an die nachfolgende Umsetzerstufe 106 anzupassen. Insbesondere kann das Signal gedämpft werden, um ein Übersteuern des Umsetzers zu verhindern. Der HF/ZF-Umsetzer 106 umfasst einen HF/NF Down-Mixer 116, der als 2-Stufen Down-Mixer 126 ausgelegt ist. Der Umsetzer umfasst zwei rauscharme Verstärker und zwei Downmixerstufen, die von zwei lokalen Oszillatoren 124a, 124b, die gleichzeitig die Oszillatorfrequenz des ZF/HF-Umsetzers 104 bereitstellen, betrieben werden. Im ZF-Zweig ist ein schmalbandiges Bandpassfilter zur Dämpfung von durch den Mischervorgang entstandenen und unerwünschten Nebenbändern angeordnet und eine Symmetriereinheit setzt das Rx ZF-Signal als ZF-Leitungssignal um, das an die Leitungsimpedanz der Kommunikationsverbindung 07 angepasst werden kann.

Reziprok hierzu ist im Tx-Zweig ein ZF/HF-Umsetzer 104 vorgesehen, der einen NF/HF-Up-Mixer 118 umfasst, der als 2-Stufen-Up-Mixer 128 ausgelegt ist. Am Übergang von Kommunikationsverbindung 07 zur Funkzelleneinrichtung 102 wird das Tx 2-Draht-Signal durch eine Antisymmetriereinheit entsymmetrisiert und über die zweistufige Mischereinheit 118 auf ein Tx HF-Band hochgesetzt, mehrfach verstärkt und durch den Combiner 112 mit dem Rx HF-Signal zu einem Antennensignal kombiniert.

Bezüglich der **Figs. 11** und **12** wird auf die Beschreibung der **Figs. 8** und **9** verwiesen, die eine analoge Darstellung gattungsgleicher Komponenten gibt, und die auch auf die in den **Figs. 11** und **12** dargestellten Komponenten der Funkzelleneinrichtung 102 sinngemäß übertragen werden können.

### Bezugszeichenliste

- 01: Funkkommunikations-Endgerät
- 02: Funknetz-Basisstation (BTS - Base Transceiver Station)
- 03: Funknetz-TMO-Repeater-Station
- 04: Antennen-Abstrahlreichweite
- 05: Analoge Gleichwellenfunkvorrichtung
- 06: Zentrale analoge Funknetz-Steuereinrichtung
- 07: Analoge Kommunikationsverbindung zwischen Steuereinrichtung und Funkzelleneinrichtung
- 08: Analoge Funkzelleneinrichtung für DMO-Repeaterbetrieb
- 09: Antennennetzwerk
- 10: Digitale Funkzelleneinrichtung nach TETRA-Standard
- 11: Zentrale digitale Funknetz-Steuereinrichtung
- 12: Digitale Kommunikationsverbindung zwischen Steuereinrichtung und Funkzelleneinrichtung
- 13: Funkzellen-Steuereinrichtung
- 14: Digitale HF-Sende-/Empfangs-Verstärkereinheit (HF-Repeater)
- 15: Digitale Repeaterverbindung
- 16: Störmeldungsverbindung
- 17: Digitale Gleichwellenfunkvorrichtung
- 18: TETRA-Gleichwellenfunkvorrichtung des Stands der Technik

- 100: TETRA-DMO-Funknetzvorrichtung
- 102: HF-Funkzelleneinrichtung
- 104: ZF/HF-Umsetzer
- 106: HF/ZF-Umsetzer
- 108: Zentrale Steuereinrichtung
- 110: TETRA-DMO-Repeater / TETRA Basisstation
- 112: Rx/Tx-Combiner
- 114: Rx/Tx-Splitter
- 116: HF/NF-Down-Mixer
- 118: NF/HF- Up-Mixer
- 120: Diversityeinheit
- 122: Dynamikregelung
- 124: Oszillator
- 126: 2-Stufen-Down-Mixer
- 128: 2-Stufen -Up-Mixer
- 130: Drahtgebundene Kommunikationsverbindung
- 132: Netzwerk-Anpassungseinheit

## Patentansprüche

1. TETRA-Gleichwellen-Funknetzvorrichtung (100), umfassend eine zentrale TETRA-Steuereinrichtung (108) und mindestens zwei Funkzelleneinrichtungen (102), wobei die Funkzelleneinrichtungen (102) mit der Steuereinrichtung (108) über eine drahtgebundene Kommunikationsverbindung (130) zur synchronisierten Abstrahlung mindestens eines von mindestens einer Funkzelleneinrichtung (102) empfangenen HF-Empfangssignals eines TETRA-Endgeräts (01) verbunden sind, wobei jede Funkzelleneinrichtung (102) einen Tx-ZF/HF-Umsetzer (104) und einen hiervon getrennten Rx-HF/ZF-Umsetzer (106) umfasst, um über ein Antennennetzwerk (09) empfangene TETRA-HF-Signale in ZF-Kommunikationssignale umzusetzen und umgekehrt, **dadurch gekennzeichnet,**
**dass** die Steuereinrichtung (108) zumindest einen getrennten Rx-ZF/HF-Umsetzer (104) und einen getrennten Tx-HF/ZF-Umsetzer (106) umfasst, um ZF-Kommunikationssignale in TETRA-HF-Signale umsetzen und umgekehrt, sowie einen TETRA-DMO-Repeater (110) und/oder eine TETRA Basisstation umfasst, der bzw. die ein im ZF-Band empfangenes TETRA-Rx-Signal nach dem Rx-ZF/HF-Umsetzers (104) auswertet und über den Tx-HF/ZF-Umsetzer (106) zur Gleichwellenausstrahlung im ZF-Band an alle Funkzelleneinrichtungen (102) als TETRA-Tx-Signal ausgibt.

2. Vorrichtung nach Anspruch 1,
**dadurch gekennzeichnet,**
**dass** die drahtgebundene Kommunikationsverbindung (130) eine Mehrdrahtleitung, bevorzugt eine 4-Draht-Leitung ist, insbesondere eine Twisted-Pair Leitung ist.

3. Vorrichtung nach einem der vorangegangenen Ansprüche,
**dadurch gekennzeichnet,**
**dass** eine maximale systembedingte Signallaufzeit über die Kommunikationsverbindung (130) zwischen einer Funkzelleneinrichtung (102) und der Steuereinrichtung 1000 µs oder weniger beträgt, insbesondere 100 µS.

4. Vorrichtung nach einem der vorangegangenen Ansprüche,
**dadurch gekennzeichnet,**
**dass** das ZF-Kommunikationssignal, das auf der Kommunikationsverbindung (130) übertragen wird, ein ZF-Signal in einem Frequenzbereich von 10 kHz bis 10 MHz, bevorzugt 50 kHz bis 1 MHz, insbesondere 80 kHz ist.

5. Vorrichtung nach einem der vorangegangenen Ansprüche,
**dadurch gekennzeichnet,**
**dass** der HF/ZF-Umsetzer (106) und/oder der ZF/HF-Umsetzer (104) eine zweistufige Mischerstufe umfassen, um HF-Signale auf ein ZF-Band herunter bzw. ZF-Signale auf ein HF-Band hochzumischen, wobei bevorzugt die zweite Mischerstufe des HF/ZF-Umsetzers (106) und der ZF/HF-Umsetzers (104) denselben Oszillator (124a, 124b) verwendet.

6. Vorrichtung nach einem der vorangegangenen Ansprüche,
**dadurch gekennzeichnet,**
**dass** das ZF-Kommunikationssignal, das auf der Kommunikationsverbindung (130) übertragen wird, ein digitalcodiertes Signal ist, dass eine digitale Abtastung des ZF-Signals oder eine digitale Abtastung des HF-Signals mit nachgeschalteter digitaler Reduktion auf einen reduzierten ZF-Digitaldatenstrom ist.

7. Vorrichtung nach einem der vorangegangenen Ansprüche,
**dadurch gekennzeichnet,**
**dass** jede Funkzelleneinrichtung (102) einen Rx/Tx-Splitter (114) und die Steuereinheit (108) einen Rx/Tx-Combiner (112) umfasst, die als Frequenzweiche oder als signallaufrichtungsabhängiger Zirkulator ausgelegt sind.

8. Vorrichtung nach einem der vorangegangenen Ansprüche,
**dadurch gekennzeichnet,**
**dass** der ZF/HF-Umsetzer (104) der Steuereinrichtung (108) eine Selektions-Diversityeinheit (120) im Rx-Zweig umfasst, die das qualitativ beste Rx-Empfangssignal als zu verarbeitendes Signal auswählt, wobei die Selektions-Diversityeinheit (120) bevorzugt das ZF-Signal auswählt.

9. Vorrichtung nach einem der vorangegangenen Ansprüche,
**dadurch gekennzeichnet,**
**dass** der HF/ZF-Umsetzer (106) der Steuereinrichtung (108) eine Netzwerk-Anpassungseinheit (132) im Tx-Zweig umfasst, die eine Laufzeitverzögerung, Phasenanpassung und/oder Pegelanpassung des abzustrahlenden Tx-Signals, bevorzugt des ZF-Signals vornimmt.

10. Vorrichtung nach einem der vorangegangenen Ansprüche,
**dadurch gekennzeichnet,**
**dass** der HF/ZF-Umsetzer (106) einer Funkzelleneinrichtung (102) eine Netzwerk-Anpassungseinheit (132) im Rx-Zweig umfasst, die eine Laufzeitverzögerung, Phasenanpassung und/oder Pegelanpassung und/oder Impedanzanpassung des empfangenen Rx-Signals, bevorzugt des ZF-Signals vornimmt.

11. Vorrichtung nach einem der vorangegangenen Ansprüche,
**dadurch gekennzeichnet,**
**dass** der TETRA-DMO-Repeater die Betriebsart 1a und 1 b bereitstellen kann.

12. Vorrichtung nach einem der vorangegangenen Ansprüche,
**dadurch gekennzeichnet, dass** im HF/ZF Umsetzer (106) und im ZF/HF-Umsetzer (104) zumindest einer Funkzelleneinrichtung (102) und der Steuereinheit (108) zumindest eine Verstärkerstufe in der HF-Seite und/oder ZF-Seite zur Kompensation von Verlusten umfasst ist.

13. Vorrichtung nach einem der vorangegangenen Ansprüche,
**dadurch gekennzeichnet, dass** ein symmetrisiertes Rx- und Tx-Signal jeweils auf einer 2-Drahtleitung der Kommunikaitonsverbindung (130) übertragen wird

## Claims

1. TETRA common-wave radio network device (100) comprising a central TETRA control unit (108) and at least two radio cell units (102), where the radio cell units (102) are connected to the control unit (108) via a wired communication link (130) for synchronized emission of at least one HF reception signal of a TETRA terminal (01) received from at least one radio cell unit (102), where each radio cell unit (102) comprises a Tx IF/HF converter (104) and an Rx HF/IF converter (106) separate from it, to convert TETRA HF signals received via an antenna network (09) into IF communication signals and vice versa,
**characterized in**
**that** the control unit (108) comprises at least one separate Rx IF/HF converter (104) and one separate Tx HF/IF converter (106), to convert IF communication signals into TETRA HF signals and vice versa, and a TETRA DMO repeater (110) and/or a TETRA base station which evaluates a received TETRA Rx signal in the IF band after the Rx IF/HF converter (104) and emits it as a TETRA Tx signal via the Tx HF/IF converter (106) for common-wave broadcasting to all radio cell units (102).

2. Device according to claim 1,
**characterized in**
**that** the wired communication link (130) is a multi-wire line, preferably a 4-wire line and in particular a twisted-pair cable.

3. Device according to one of the preceding claims,
**characterized in**
**that** a maximum system-related signal run-time via the communication link (130) between a radio cell unit (102) and the control unit is 1000 µs or less, in particular 100 µs.

4. Device according to one of the preceding claims,
**characterized in**
**that** the IF communication signal transmitted via the communication link (130) is an IF signal in a frequency range of 10 kHz to 10 MHz, preferably 50 kHz to 1 MHz and in particular 80 kHz.

5. Device according to one of the preceding claims,
**characterized in**
**that** the HF/IF converter (106) and/or the IF/HF converter (104) comprise a two-stage mixing unit, to down-mix HF signals to an IF band or up-mix IF signals to an HF Band, where the second mixing stage of the HF/IF converter (106) and of the IF/HF converter (104) preferably use the same oscillator (124a, 124b).

6. Device according to one of the preceding claims,
**characterized in**
**that** the IF communication signal transmitted via the communication link (130) is a digitally coded signal which is a digital scan of the IF signal or a digital scan of the HF signal with downstream digital reduction to achieve a reduced IF digital data flow.

7. Device according to one of the preceding claims,
**characterized in**
**that** each radio cell unit (102) comprises an Rx/Tx splitting unit (114) and the control unit (108) an Rx/Tx combining unit (112), which are designed as a frequency crossover or as a circulator dependent on the signal run direction.

8. Device according to one of the preceding claims,
**characterized in**
**that** the IF/HF converter (104) of the control unit (108) comprises a selection diversity unit (120) in the Rx path which selects the best-quality Rx reception signal as the signal to be processed, with the selection diversity unit (120) preferably selecting the IF signal.

9. Device according to one of the preceding claims,
**characterized in**
**that** the HF/IF converter (106) of the control unit (108) comprises a network matching unit (132) in the Tx path, which achieves a run-time delay, phase adjustment and/or level adjustment of the Tx signal to be emitted, preferably of the IF signal.

10. Device according to one of the preceding claims,
**characterized in**
**that** the HF/IF converter (106) of the control unit (102) comprises a network matching unit (132) in the Rx path, which achieves a run-time delay, phase adjustment and/or level adjustment and/or impedance adjustment of the received Rx signal, preferably of the IF signal.

11. Device according to one of the preceding claims,
**characterized in**
**that** the TETRA DMO repeater can provide the modes 1 a and 1 b.

12. Device according to one of the preceding claims,
**characterized in**
**that** the HF/IF converter (106) and the IF/HF converter (104) of at least one radio cell unit (102) and of the control unit (108) comprise at least one amplifier stage in the HF side and/or IF side for compensation of losses.

13. Device according to one of the preceding claims,
**characterized in**
**that** a symmetrized Rx signal and Tx signal are each transmitted on a 2-wire line of the communication link (130).

## Revendications

1. Dispositif de réseau radio isofréquence TETRA (100), comprenant un organe central de commande TETRA (108) et au moins deux dispositifs à cellules radio (102), sachant que via une liaison de communication câblée (130), les dispositifs à cellules radio (102) sont reliés à l'organe de commande (108) pour l'émission synchronisée d'au moins un signal de réception HF d'un terminal TETRA (01) reçu par au moins un dispositif à cellules radio (102), chaque dispositif à cellules radio (102) comprenant un convertisseur Tx-FI/HF (104) et un convertisseur Rx-HF/FI (106) distincts afin de convertir des signaux HF TETRA, reçus via un réseau d'antennes (09), en signaux de communication FI et inversement,
**caractérisé en ce**
**que** l'organe de commande (108) comprend au moins un convertisseur Rx-FI/HF (104) distinct et un convertisseur Tx-HF/FI (106) distinct afin de convertir des signaux de communication FI en signaux HF TETRA et inversement, ainsi qu'un répéteur TETRA DMO (110) et/ou une station de base TETRA, lequel ou laquelle analyse un signal Rx TETRA reçu dans la bande FI après le convertisseur Rx-FI/HF (104) et, via le convertisseur Tx-HF/FI (106), l'envoie sous forme de signal Tx TETRA à tous les dispositifs à cellules radio (102) pour radiodiffusion isofréquence dans la bande FI.

2. Dispositif selon la revendication 1,
**caractérisé en ce**
**que** la liaison de communication câblée (130) est une ligne multifilaire, de préférence une ligne à 4 fils, en particulier une ligne à paires torsadées.

3. Dispositif selon l'une des revendications précédentes,
**caractérisé en ce**
**qu'**un temps de propagation maximal, inhérent au système, des signaux via la liaison de communication (130) entre un dispositif à cellules radio (102) et l'organe de commande s'élève à 1000 µs ou moins, en particulier à 100 µs.

4. Dispositif selon l'une des revendications précédentes,
**caractérisé en ce**
**que** le signal de communication FI, qui est transmis sur la liaison de communication (130), est un signal FI dans une plage de fréquences de 10 kHz à 10 MHz, de préférence de 50 kHz à 1 MHz, en particulier un signal de 80 kHz.

5. Dispositif selon l'une des revendications précédentes,
**caractérisé en ce**
**que** le convertisseur HF/FI (106) et/ou le convertisseur FI/HF (104) comprend/comprennent un mélangeur à deux étages, pour mélanger vers le bas des signaux HF sur une bande FI ou mélanger vers le haut des signaux FI sur une bande HF, sachant que le deuxième étage du convertisseur HF/FI (106) et du convertisseur FI/HF (104) utilisent de préférence le même oscillateur (124a, 124b).

6. Dispositif selon l'une des revendications précédentes,
**caractérisé en ce**
**que** le signal de communication FI transmis via la liaison de communication (130) est un signal codé numériquement, qui est un échantillonnage numérique du signal FI ou un échantillonnage numérique du signal HF avec réduction numérique en aval afin d'obtenir un flux de données numériques FI réduit.

7. Dispositif selon l'une des revendications précédentes,
**caractérisé en ce**
**que** chaque dispositif à cellules radio (102) comprend un répartiteur Rx/Tx (114) et l'organe de commande (108) un combineur Rx/Tx (112) qui sont conçus en tant que diviseur de fréquence ou circulateur dépendant du sens de propagation du signal.

8. Dispositif selon l'une des revendications précédentes,
**caractérisé en ce**
**que** le convertisseur FI/HF (104) de l'organe de commande (108) comprend une unité de sélection de diversité (120) dans la branche Rx, qui sélectionne le signal de réception Rx de meilleure qualité en tant que signal à traiter, sachant que l'unité de sélection de diversité (120) sélectionne de préférence le signal FI.

9. Dispositif selon l'une des revendications précédentes,
**caractérisé en ce**
**que** le convertisseur HF/FI (106) de l'organe de commande (108) comprend une unité d'adaptation de réseau (132) dans la branche Tx, qui procède à un retard du temps de propagation, à un accord de phase et/ou à une adaptation de niveau du signal Tx à diffuser, de préférence du signal FI.

10. Dispositif selon l'une des revendications précédentes,
**caractérisé en ce**
**que** le convertisseur HF/FI (106) d'un dispositif à cellules radio (102) comprend une unité d'adaptation de réseau (132) dans la branche Rx, qui procède à un retard du temps de propagation, à un accord de phase et/ou à une adaptation de niveau et/ou à une adaptation d'impédance du signal Rx reçu, de préférence du signal FI.

11. Dispositif selon l'une des revendications précédentes,
**caractérisé en ce**
**que** le répéteur TETRA DMO peut mettre à disposition les modes opératoires 1a et 1 b.

12. Dispositif selon l'une des revendications précédentes,
**caractérisé en ce**
**que** dans le convertisseur HF/FI (106) et dans le convertisseur FI/HF (104) est compris au moins un dispositif à cellules radio (102) et dans l'organe de commande (108) au moins un étage d'amplification dans le circuit HF et/ou le circuit FI pour compenser des pertes.

13. Dispositif selon l'une des revendications précédentes,
**caractérisé en ce**
**qu'**un signal Rx et un signal Tx symétrisés sont respectivement transmis sur une ligne à 2 fils de la liaison de communication (130).
